# EUROPEAN PATENT APPLICATION

(11) **EP 4 570 660 A1**
(43) Date of publication of application: **18.06.2025**
(21) Application number: 24213394.0
(22) Date of filing: 15.11.2024
(51) Int. Cl.: B64D 11/06, B60N 3/10, A47C 7/62

(54) **MULTIPURPOSE ITEM HOLDER**

(30) Priority: 15.12.2023 IN 202311085802; 22.03.2024 US 202418614243
(71) Applicant: B/E Aerospace, Inc., Winston-Salem, NC 27105 (US)
(72) Inventor: ZOPE, Kishor Kitkul, 411057 Pune (IN); SRINIVASA, Ashwin, 500091 Hyderabad (IN)
(74) Representative: Dehns

(57) **Abstract**

A seat back holder is disclosed, which may be configured for holding multiple items. The seat back holder includes a body (104) couplable to a mount (102). The body (104) may be configured to repeatably rotate around an axis between a mated position adjacent to the mount and a deployed position via a pivoting mechanism of the seat back holder. The body (104) may include a plate (200) defining a recess configured to receive an object. The plate (200) may include a first arm and a second arm on opposing sides of the recess. The first arm and the second arm may each include a tab extending up from an inner-top surface of the body (104). Various other features may be included that may be in a compact format that allow multiple items to be held simultaneously.

## Description

### CROSS-REFERENCE TO RELATED APPLICATIONS

The present application claims the benefit of India Provisional Patent Application 202311085802, filed December 15, 2023, titled MULTIPURPOSE ITEM HOLDER, naming Kishor Kitkul Zope, and Ashwin Srinivasa as inventors.

### TECHNICAL FIELD

The present disclosure relates generally to holders, and, more particularly, to multi-purpose holders on the back of seats.

### BACKGROUND

Aircraft cabins typically include a seat back-mounted tray. In existing solutions, aircraft economy seats do not typically have the stowage options and space available to premium class seats. Passengers may try to look for non-optimal options for cramming their belongings for storage, such as under the seat.

Therefore, there may be a desire for a system that improves upon these issues.

### SUMMARY

A seat back holder is disclosed in accordance with one or more illustrative embodiments of the present disclosure. In one illustrative embodiment, the seat back holder may include a mount. In another illustrative embodiment, the seat back holder may include a body coupled to the mount. The body may be configured to repeatably rotate around an axis between a mated position adjacent to the mount and a deployed position via a pivoting mechanism of the seat back holder. In another illustrative embodiment, the body may include a plate defining a recess configured to receive an object.

In a further aspect, the plate may include a first arm and a second arm on opposing sides of the recess. In another illustrative embodiment, the body may include a void defined by, and passing through, at least one of the first arm or the second arm. In another illustrative embodiment, the first arm and the second arm may each include a tab extending up from an inner-top surface of the body. In another illustrative embodiment, each of the tabs may include a magnet configured to mate to a corresponding mount magnet on the mount.

In another illustrative embodiment, the recess may be curved and thereby configured to receive a bottle neck of a bottle. In another illustrative embodiment, the seat back holder may have a width that is less than 8 inches wide and the body may have a length less than 6 inches. In another illustrative embodiment, the body may include at least one of nylon material or thermoplastic material. In another illustrative embodiment, the pivoting mechanism may include a shaft. In another illustrative embodiment, the pivoting mechanism may include at least one spring configured to bias the body towards the mated position from the deployed position.

A body for a seat back holder is disclosed in accordance with one or more illustrative embodiments of the present disclosure. In one illustrative embodiment, the body may be configured to repeatably rotate around an axis between a mated position and a deployed position via a pivoting mechanism. In another illustrative embodiment, the body may include a plate defining a recess configured to receive an object.

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are example and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims.
FIG. 1A is a seat coupled to a seat back holder in a mated position, in accordance with one or more embodiments of the present disclosure.
FIG. 1B is the seat back holder in a deployed position, in accordance with one or more embodiments of the present disclosure.
FIG. 2 is a view of a seat back holder, in accordance with one or more embodiments of the present disclosure.
FIG. 3 is a top view of a seat back holder, in accordance with one or more embodiments of the present disclosure.
FIG. 4 is a front view of a body of a seat back holder, in accordance with one or more embodiments of the present disclosure.
FIG. 5A is an example use case of a seat back holder supporting a bottle and a display device, in accordance with one or more embodiments of the present disclosure.
FIG. 5B is an example use case of a seat back holder supporting a bottle and eyeglasses, in accordance with one or more embodiments of the present disclosure.
FIG. 5C is an example use case of a seat back holder supporting eyeglasses and a strapped bag, in accordance with one or more embodiments of the present disclosure.

### DETAILED DESCRIPTION

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

Many passengers prefer to watch entertainment platforms on their cell phones and to stow it in a stationary position without using his/her hand which can be cumbersome at times. There are also other items such as hats, bags, bottles which do not necessarily have solutions for storage. Further, the space on the back of aircraft seats may be limited, such as being mostly occupied by relatively large fold down trays.

Broadly speaking, embodiments herein are directed to a item holder (e.g., seat back holder) configured to be mounted to the back of a seat (e.g., aircraft seat) and simultaneously hold a variety of items while only taking up a relatively small amount of space compared to conventional fold down trays. Embodiments may leverage space available adjacent to the meal table tray to provide an option which is compact and which provides multiple stowing options such as for a bottle, eyeglasses, a hat, a strapped bag, a display device such as a cell phone, and/or more.

Embodiments herein may serve as a one stop solution for those passengers who are interested in keeping/parking a few of their belongings such as phones, headphones, caps, handbags, spectacles and beverage/water bottles during a long-haul flight in economy class. Benefits may include: helping the user to free themself by stowing their belongings rather than keeping them in cabin luggage or under the baggage bar; helping the user to achieve a comfort profile while watching the mobile platforms; staying in the deployed position using the weight of the stowed items themselves; and/or providing a relatively low cost and easily retrofittable design that may only require minimal changes to the seat back shell.

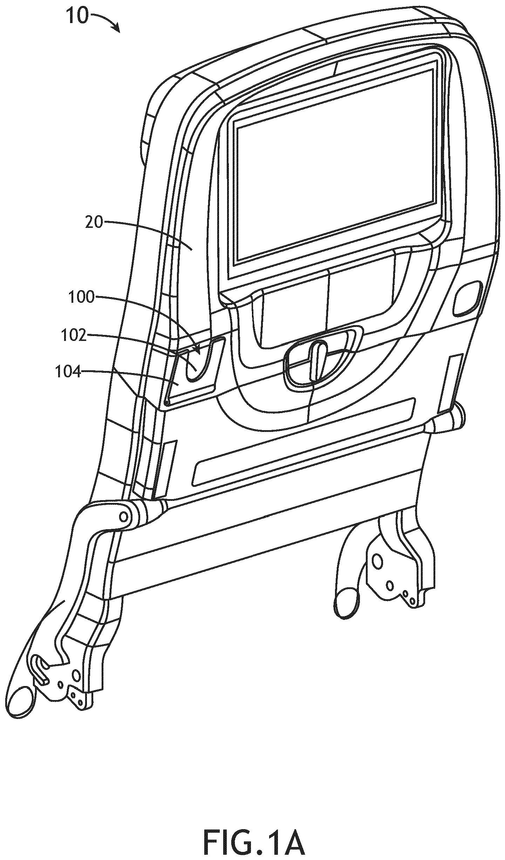

FIG. 1A illustrates a system 10 comprising a seat back 20 coupled to a seat back holder 100 in a mated position, in accordance with one or more embodiments of the present disclosure.

The mated position may include the body 104 being mated, adjacent, coupled, and/or the like to the mount 102. For example, they may both be configured to be aligned in a vertical orientation, parallel to the seat back 20 by default.

The seat back holder 100 may include a mount 102 and a body 104. The mount 102 may be configured to mounted (e.g., be fastened via holes not shown, glued, and/or the like) to the seat back 20.

The body 104 may be coupled to the mount 102.

The body 104 and/or mount 102 may include any material, such as materials suitable for 3D printing. For example, the body 104 may include at least one of nylon material or thermoplastic material.

As shown, the seat back 20 itself may include a seat back recess for installing the seat back holder 100 to allow it to be more flush with the seat back 20. This may also allow for upgrading and/or replacement when broken. However, in embodiments, the mount 102 may be integrated into the seat back 20, such as the mount 102 being an integral, permanent (non-replaceable) designed portion of the entire seat back 20.

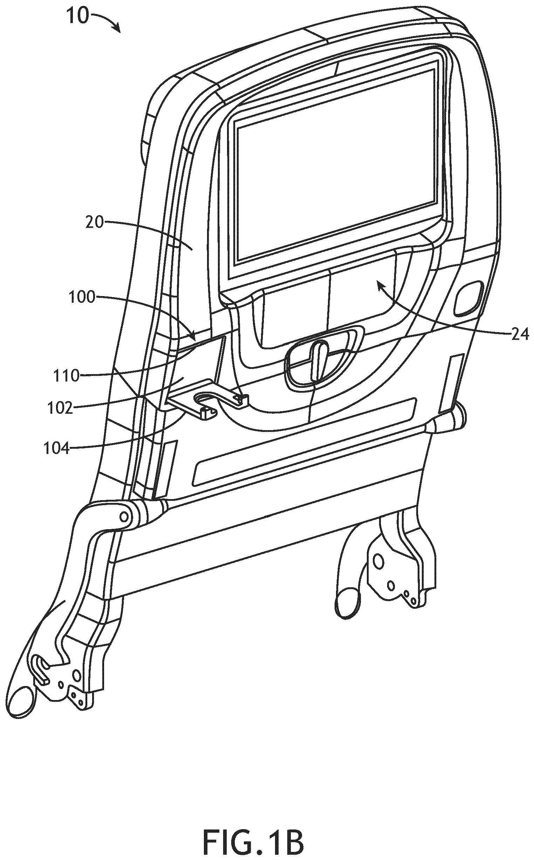

FIG. 1B illustrates the seat back holder 100 in a deployed position (e.g., for use by a user who pulls it down), in accordance with one or more embodiments of the present disclosure.

The mount 102 may include mount magnets 110 for holding the body 104 in place in a mated position.

The seat back holder 100 may be configured to be located in one or more locations of the seat back 20. For example, the seat back holder 100 may be in a first location 22 that is adjacent and/or above and center-left of a tray. For example, the seat back holder 100 may be in a (second) location 24 that is adjacent and/or centered above a tray.

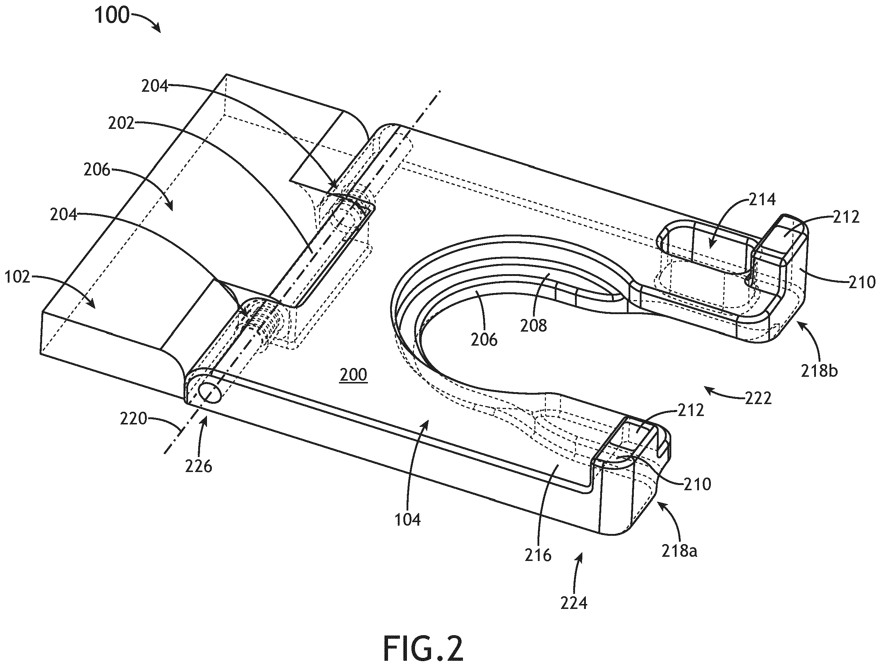

FIG. 2 illustrates a view of a seat back holder 100, in accordance with one or more embodiments of the present disclosure.

The body 104 may be configured to repeatably rotate (back and forth as it is pulled down for selective use) around an axis 220. This rotation may occur between a mated position adjacent to the mount and a deployed position via a pivoting mechanism 226 of the seat back holder 100. The body 104 may comprise a plate 200 that defines a recess 222. The recess 222 may be configured to receive an object 508, which may be at a front of the body 104 for receiving the object 508 at the front, such as towards a center of the plate 200.

The plate 200 may include a first arm 218a and a second arm 218b. These arms 218a, 218b may be located on opposing sides of the recess 222.

The body 104 of the seat back holder may include a void 214, which may be configured to hold eyeglasses or any other object that fits. The void 214 may be defined by, and pass through, at least one of the first arm 218a or the second arm 218b. For example, as shown the void 214 may be a hole passing through the second arm 218b, which may be on the right side.

The first arm 218a and the second arm 218b of the seat back holder may each include a tab 210. These tabs 210 may extend up from the inner-top surface 216 of the body 104. Each of the tabs 210 may be configured to stop an object (e.g., cell phone) from sliding off the inner-top surface 216. This may be useful for mounting a cell-phone, or other display device with a display for hands-free storage, and/or viewing.

Each of the tabs 210 of the seat back holder may include a magnet 212. The magnet 212 may be configured to mate to a corresponding mount magnet 110 on the mount 102, such as may prevent the body 104 from falling down unintended.

The recess 222 of the seat back holder may be curved, such as including a curved surface 208. The curved surface 208 may be configured to receive, support, and hold a bottle neck of a bottle 508. The recess 222 may include a front curved surface 206 adjacent to the curved surface 208.

The pivoting mechanism 226 may include at least one spring 204. The springs 204 may provide a relatively low spring force which is configured to be overcome by a weight of an item that is stowed. For example, the spring may include a torsion spring configured to provide a torsion force within 3 times the force needed to move the body 104 up from a level/horizontal angle relative to gravity when on a flat runway, which may be at or near the deployed position. This may be higher than a maximum force needed to resist gravity when no item is on the body 104.

The pivoting mechanism 226 may include a shaft 202 for rotating. The pivoting mechanism 226 may include springs 204 (e.g., one on each side of the mount 102). The springs 204 may be configured to bias the body 104 to rotate towards the mated position from the deployed position. The pivoting mechanism 226 may be configured to rotate any angle range, such as between 30 degree and 100 degrees.

The tabs 210 may be at a first front end 224 of the body 104, opposite an end of the pivoting mechanism 226.

The mated position may include an inner-top surface 216 of the body 104 being mated, adjacent, coupled, proximate, and/or the like to an inner mount surface of the mount 102.

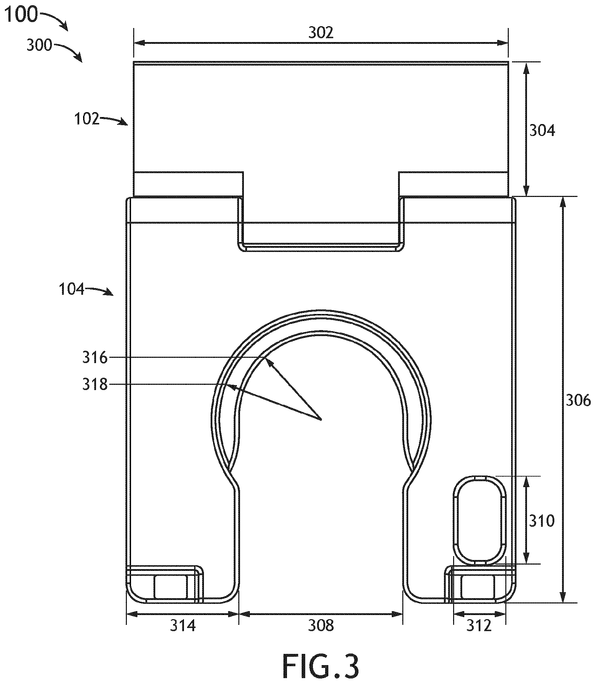

FIG. 3 illustrates a top view of a seat back holder 100, in accordance with one or more embodiments of the present disclosure.

The seat back holder 100 may be less than 8 inches in width 302 and the body 104 may be less than 6 inches in body length 306.

Any one of the dimensions for any component (e.g., body 104) herein may be used in any embodiment, individually and/or in combination with multiple or all of any other dimensions. However, such dimensions are not necessarily limiting and a person of skill in the art will understand that concepts and components herein may extend to other dimensions, shapes, configurations and the like. For conciseness, any dimension may be extended in any embodiment to be within 50% of any dimension herein, although even then, the dimensions listed are not necessarily limited to within 50% in every embodiment. As an illustrative example, an "element of height 1.0 inches" may include embodiments of the element with a height between 0.5 to 1.5 inches. One or more of following dimensions may be used, alone or in combination (within 50% of these dimensions): a width 302 of 2.25 inches, a mount length 304 of 0.85 inches, a body length 306 of 2.50 inches, an arm width 314 of 0.7 inches, a recess front entrance width 308 of 1 inch, a 30 of inches, a void width 312 of 0.3 inches, and/or a void length 310 of 0.5 inches.

For receiving an object such as a neck of a bottle 508, the front curved surface 206 may be any size, such as within 50% of recess radius 316 of 0.5 inches, and an upper level recess radius 318 of 0.65 inches.

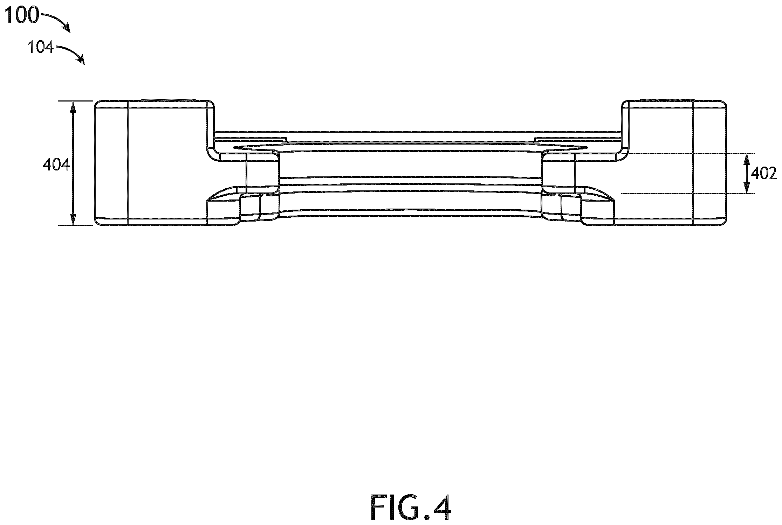

FIG. 4 illustrates a front view of a body 104 of a seat back holder 100, in accordance with one or more embodiments of the present disclosure.

One or more of following dimensions may be used, alone or in combination (within 50% of these dimensions): a total seat back holder height 404 of 0.5 inches, and/or a plate thickness 402 of 0.25 inches.

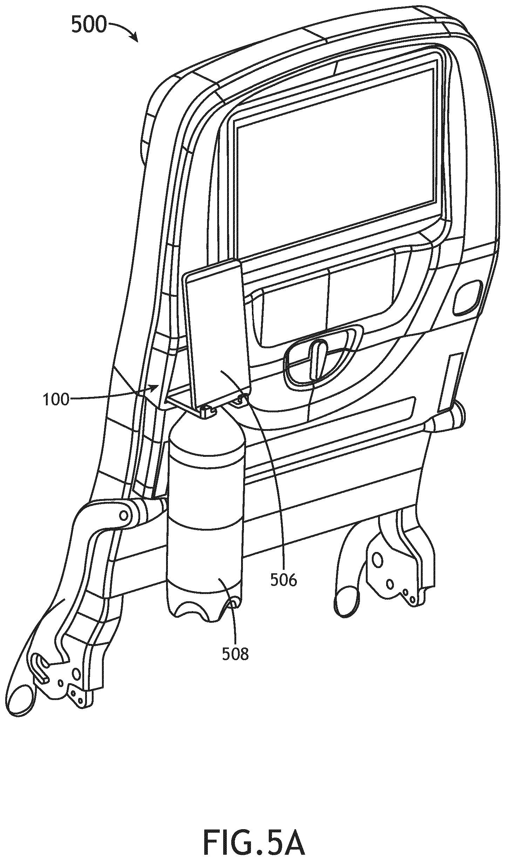

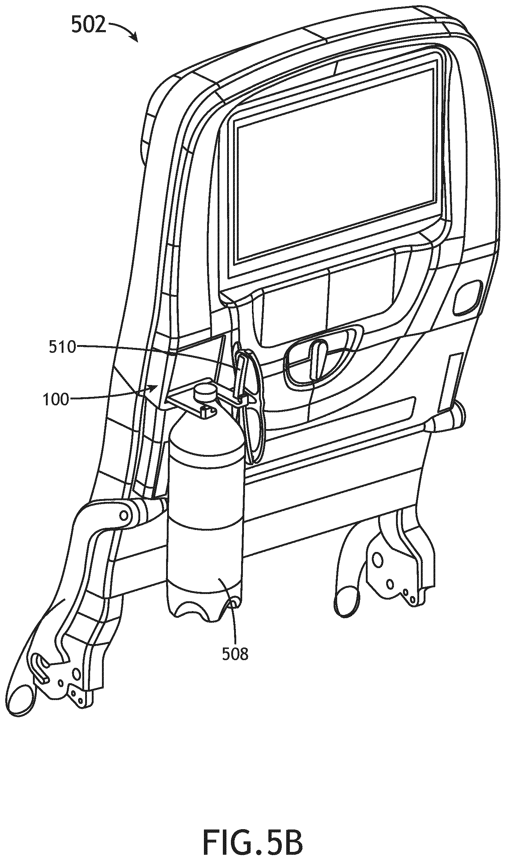

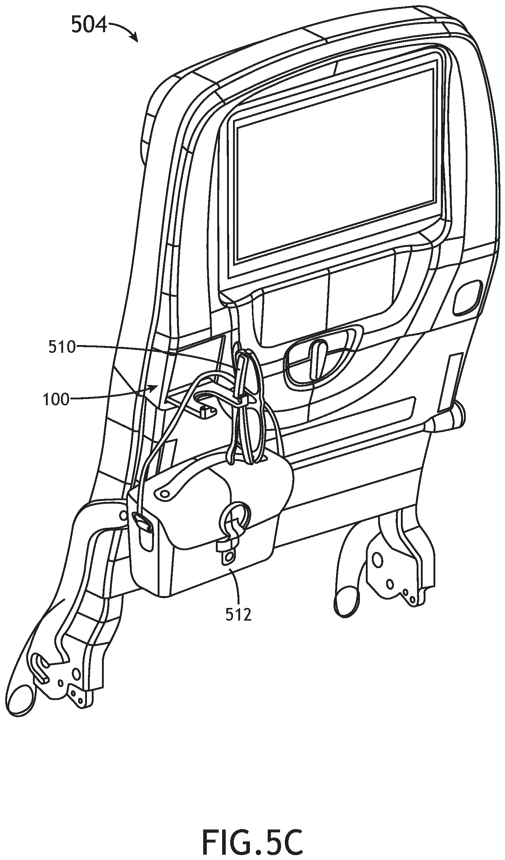

Various use cases of the seat back holder 100 may include holding multiple items simultaneously, although the use cases herein are merely illustrative and not limiting. FIG. 5A illustrates an example use case 500 of a seat back holder 100 supporting a bottle 508 (e.g., standard bottle with a bottle neck and twist-off cap) and a display device 506 (e.g., mobile cell phone), in accordance with one or more embodiments of the present disclosure. FIG. 5B illustrates an example use case 502 of a seat back holder 100 supporting a bottle 508 and eyeglasses 510, in accordance with one or more embodiments of the present disclosure. FIG. 5C illustrates an example use case 504 of a seat back holder 100 supporting eyeglasses 510 and a strapped bag 512 (e.g., purse), in accordance with one or more embodiments of the present disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "in embodiments", "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination or sub-combination of two or more such features, along with any other features which may not necessarily be expressly described or inherently present in the instant disclosure.

It is to be understood that embodiments of the methods disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to one or more of the steps disclosed herein.

Although inventive concepts have been described with reference to the embodiments illustrated in the attached drawing figures, equivalents may be employed and substitutions made herein without departing from the scope of the claims. Components illustrated and described herein are merely examples of a system/device and components that may be used to implement embodiments of the inventive concepts and may be replaced with other devices and components without departing from the scope of the claims. Furthermore, any dimensions, degrees, and/or numerical ranges provided herein are to be understood as non-limiting examples unless otherwise specified in the claims.

## Claims

1. A seat back holder comprising:
a mount (102); and
a body (104) coupled to the mount (102) and configured to repeatably rotate around an axis between a mated position adjacent to the mount (102) and a deployed position via a pivoting mechanism of the seat back holder, wherein the body (104) comprises a plate (200) defining a recess (222) configured to receive an object.

2. The seat back holder of Claim 1, wherein the plate (200) comprises a first arm and a second arm on opposing sides of the recess.

3. The seat back holder of Claim 2, wherein the body (104) comprises a void defined by, and passing through, at least one of the first arm or the second arm.

4. The seat back holder of Claim 2, wherein the first arm and the second arm each comprise a tab extending up from an inner-top surface of the body (104), and optionally wherein each of the tabs comprise a magnet configured to mate to a corresponding mount magnet the mount.

5. The seat back holder of any preceding Claim, wherein the recess is curved and thereby configured to receive a bottle neck of a bottle.

6. The seat back holder of any preceding Claim, wherein the seat back holder has a width that is less than 8 inches wide and the body (104) has a length less than 6 inches.

7. The seat back holder of any preceding Claim, wherein the body (104) comprises at least one of nylon material or thermoplastic material.

8. The seat back holder of any preceding Claim, wherein the pivoting mechanism comprises a shaft, and optionally wherein the pivoting mechanism comprises at least one spring configured bias the body (104) towards the mated position from the deployed position.

9. A body (104) for a seat back holder, the body (104):
configured to repeatably rotate around an axis between a mated position and a deployed position via a pivoting mechanism, wherein the body (104) comprises a plate (200) defining a recess configured to receive an object.

10. The body (104) of Claim 9, wherein the plate (200) comprises a first arm (218a) and a second arm (218b) on opposing sides of the recess.

11. The body (104) of Claim 10, wherein the body (104) comprises a void defined by, and passing through, at least one of the first arm or the second arm (218b).

12. The body (104) of Claim 10, wherein the first arm and the second arm each comprise a tab extending up from an inner-top surface of the body (104), and optionally wherein each of the tabs comprise a magnet configured to mate to a corresponding mount magnet the mount.

13. The body (104) of any of Claims 9 to 12, wherein the recess is curved and thereby configured to receive a bottle neck of a bottle.

14. The body (104) of any of Claims 9 to 13, wherein the body (104) has a width that is less than 8 inches wide and the body (104) has a length less than 6 inches, and/or wherein the body (104) comprises at least one of nylon material or thermoplastic material.

15. The body (104) of any of Claims 9 to 14, wherein the pivoting mechanism comprises a shaft, and optionally wherein the pivoting mechanism comprises at least one spring configured bias the body (104) towards the mated position from the deployed position.
